# EUROPEAN PATENT SPECIFICATION

(11) **EP 3 509 038 B1**
(45) Date of publication and mention of the grant of the patent: **14.01.2026**
(21) Application number: 17845931.9
(22) Date of filing: 19.07.2017
(51) Int. Cl.: G07C 5/00, G07C 5/08

(54) **DRIVE RECORDER**
FAHRDATENSCHREIBER
ENREGISTREUR DE CONDUITE

(30) Priority: 05.09.2016 JP 2016172465
(43) Date of publication of application: 10.07.2019
(73) Proprietor: NEC Corporation, Tokyo 108-8001 (JP)
(72) Inventor: TSUKAHARA, Hidenori, Tokyo 108-8001 (JP)
(74) Representative: Vossius & Partner Patentanwälte Rechtsanwälte mbB
(86) International application number: PCT/JP2017/026069
(87) International publication number: WO 2018/042921

(56) References cited:
- WO-A1-2013/057842
- WO-A1-2015/099500
- WO-A1-2016/027022
- JP-A- 2006 168 717
- JP-A- 2008 018 853
- JP-A- 2012 003 607
- JP-A- 2013 206 421
- JP-A- 2014 032 612
- JP-B2- 5 709 633
- US-A1- 2010 020 175
- US-A1- 2015 112 730
- US-A1- 2017 243 412
- US-B1- 6 324 450

## Description

### TECHNICAL FIELD

The present invention relates to a drive recorder and a processing method executed by a drive recorder.

### BACKGROUND

For analysis of causes of an accident of a vehicle such as an automobile, monitoring of the driving condition, or a safe driving guidance, various devices and systems for recording the driving condition of a vehicle have been proposed or commercialized.

For example, Patent Literature 1 describes a device for recording the driving condition of a vehicle that travels through operation by a driver, such as a railway train. The device described in Patent Literature 1 includes a device installed in the vehicle (drive recorder), and a driving condition recording device and a display device installed inside or outside the vehicle. The drive recorder includes a camera unit, a microphone unit, an operation unit, a driver's condition acquiring unit, a control unit, a recording unit, and a time-of-day generation unit that are provided to the vehicle. The camera unit captures a video of the front side in the vehicle traveling direction. The microphone unit collects sounds in the cab. The operation unit includes an operation member for driving the vehicle. The control unit acquires an amount of operation from the operation member and controls service operation of the train. The driver's condition acquiring unit measures biological information such as brain waves, pulse, blood pressure, and body temperature of the driver. The time-of-day generation unit generates the current time of day. The recording unit records information (video, sound, operation, biological information of the driver) measured by the aforementioned various devices as time-series information. Meanwhile, the driving condition recording device acquires various types of information recorded by the recording unit via a communication means, combines a plurality of types of information by using the time of day included in the respective pieces of information as a key, summarizes the video information, the operation condition of the vehicle, and the like in one screen, and displays it on a display device.

Patent Literature 2 describes a drive recorder that records an image captured by a camera mounted on a vehicle. The drive recorder described in Patent Literature 2 includes an acceleration detection unit, an accident determination unit, an identification unit, and a transmission unit. The acceleration detection unit detects acceleration of the vehicle, and senses an impact applied to the vehicle. The accident determination unit determines that an accident occurred when the magnitude of the detected acceleration exceeds a threshold. The identification unit identifies a time point at which the magnitude of the acceleration detected by the acceleration detection unit is maximized after it is determined that the accident occurred. The transmission unit transmits, to an external device, an image within a predetermined time width including the time point at which the maximum value is identified, among the recorded images. The transmission unit determines the predetermined time width based on the vehicle speed.

Patent Literature 3 describes a drive recorder capable of preventing images captured by a camera mounted on the vehicle from being lost even when the vehicle is burned out by an accident. The drive recorder described in Patent Literature 3 includes an imaging means, a measuring means, a recording means, an accident sensing means, a control means, and a transmission means. The imaging means captures the vehicle condition at the time of traveling. The measuring means measures the driving condition of the vehicle at the time of traveling. The accident sensing means senses that an accident has occurred in the vehicle. The control means controls, when it is sensed that an accident has occurred, to store continuous video data or/and drive data before the accident or after the accident or before and after the accident, recorded in the recording means, for a predetermined time. The transmission means transmits the video data stored in the recording means to the outside. For example, the transmission means transmits an image or the like to a mobile wireless communication device such as a mobile phone or a mobile communication device, and transmits an image or the like from the mobile wireless communications device to a server connected through a network such as the Internet. The server records an image or the like and uses it for analysis of the cause of an accident.

US 6 324 450 B1 relates to a mobile object information recording apparatus that includes first and second cameras and various vehicle condition sensors for detecting mobile object information representing the status of a vehicle. An abnormal level detector detects an abnormal level of the vehicle on the basis of the acceleration detected by a 3-dimensional sensor. A data amount setting unit sets the amount of data to be stored in a file area to a value corresponding to the detected abnormal level, and memory controller stores, into the file area, mobile object information with a length of time corresponding to the determined amount of data, including periods immediately before and after the moment at which the abnormal level is detected. WO2016/027022 A1 is a related prior art document. Another drive recorder according to the prior art is known by WO2015/099500 A1.
Patent Literature 1: JP 2013-47055 A
Patent Literature 2: JP 5926978 B
Patent Literature 3: JP 2006-168717 A

### SUMMARY

The invention is specified by the independent claims.

The most part of the video recorded by the technology described in Patent Literature 1 is of a period in which no problem occurs. In other words, the most part of a video is useless for analysis of causes of an accident of the vehicle, monitoring of the driving condition, or safe driving guidance. Therefore, it takes time to find a part of the video containing a problem such as so-called near-miss or the like. Meanwhile, according to the technologies described in Patent Literature 2 and Patent Literature 3, only a video of a predetermined section including a time point when acceleration of the vehicle becomes a maximum value or a scene of an accident or the like is output to an external device. Accordingly, it is easy to find a video including a problem. Further, according to the technology of Patent Literature 2, as the vehicle speed is higher, the time width of a predetermined section is longer, for example. Therefore, it is likely to have a clue to know the scale of an accident even though the speed is high. Further, in the case of an accident in a low speed, it is possible to eliminate record of a useless video.

However, according to the knowledge of the present inventor, even in the case of the same speed, if another traveling condition of the vehicle differs, the length of a time period of a video useful for analysis of causes of an accident, monitoring of the driving condition, or safe driving guidance differs. Therefore, in the technology described in Patent Literature 2 that the video segments are the same in the case of the same speed, it is difficult to save a video useful for analysis of causes of an accident, monitoring of the driving condition, or safe operating guidance, without excess or deficiency.

An exemplary object of the present invention is to provide a drive recorder that solves the problem described above, that is, a problem that it is difficult to save necessary video information without excess or deficiency.

A drive recorder according to an exemplary aspect of the present invention is defined in independent claim 1.

A processing method according to another exemplary aspect of the present invention is a processing method executed by a drive recorder as defined by independent claim 2.

With the configuration described above, the present invention is able to save a video useful for analysis of causes of an accident, monitoring of the driving condition, or safe driving guidance, without excess or deficiency.

### BRIEF DESCRIPTION OF THE DRAWINGS

Fig. 1 is a block diagram of a drive recorder according to a first exemplary embodiment of the present invention.
Fig. 2 is a flowchart illustrating an exemplary operation of a drive recorder according to first and second exemplary embodiments of the present invention.
Fig. 3 is a block diagram illustrating an example of an abnormal event detection unit according to the first exemplary embodiment, which does not form part of the invention.
Fig. 4 is a graph illustrating an example of a temporal change in acceleration of a vehicle detected by an acceleration sensor according to the first exemplary embodiment, which does not form part of the invention.
Fig. 5 is a block diagram illustrating an example of a time period determination unit according to the first exemplary embodiment, which does not form part of the invention.
Fig. 6 is a graph illustrating an example of a temporal change in acceleration of a vehicle detected by the acceleration sensor according to the first exemplary embodiment, which does not form part of the invention.
Fig. 7 is a block diagram illustrating another example of a time period determination unit according to the first exemplary embodiment, which does not form part of the invention.
Fig. 8 is a block diagram illustrating another example of a time period determination unit according to the first exemplary embodiment, which does not form part of the invention.
Fig. 9 is a diagram illustrating an example of a correspondence table of place and the length of a time period according to the first exemplary embodiment, which does not form part of the invention.
Fig. 10 is a block diagram illustrating another example of a time period determination unit according to the first exemplary embodiment, which does not form part of the invention.
Fig. 11 is a diagram illustrating an example of a correspondence table of the time of day and the length of a time period according to the first exemplary embodiment, which does not form part of the invention.
Fig. 12 is a block diagram illustrating another example of a time period determination unit in the first exemplary embodiment, which does not form part of the invention.
Fig. 13 is a diagram illustrating an example of a correspondence table of illumination and the length of a time period according to the first exemplary embodiment, which does not form part of the invention.
Fig. 14 is a block diagram illustrating another example of a time period determination unit according to the first exemplary embodiment, which does not form part of the invention.
Fig. 15 is a diagram illustrating an example of a correspondence table of weather conditions and the length of a time period according to the first exemplary embodiment, which does not form part of the invention.
Fig. 16 is a block diagram illustrating another example of a time period determination unit according to the first exemplary embodiment of the present invention.
Fig. 17 is a diagram illustrating an example of a correspondence table of biological information and the length of a time period according to the first exemplary embodiment of the present invention.
Fig. 18 is a diagram illustrating an exemplary format of a file created by a data saving unit according to the first exemplary embodiment, which does not form part of the invention.
Fig. 19 is a diagram illustrating another exemplary format of a file created by the data saving unit according to the first exemplary embodiment, which does not form part of the invention.
Fig. 20 is a block diagram of a drive recorder according to a second exemplary embodiment, which does not form part of the invention.
Fig. 21 is a block diagram of a driving condition recording device according to a third exemplary embodiment, which does not form part of the invention.
Fig. 22 is a block diagram illustrating an example of an information terminal device according to the third exemplary embodiment, which does not form part of the invention.
Fig. 23 is a flowchart illustrating an exemplary operation of the information terminal device according to the third exemplary embodiment, which does not form part of the invention.
Fig. 24 is a diagram illustrating an exemplary format of a file recorded in a data saving unit according to the third exemplary embodiment, which does not form part of the invention.
Fig. 25 is a flowchart illustrating an exemplary operation of an information terminal device according to a fourth exemplary embodiment, which does not form part of the invention.

### EXEMPLARY EMBODIMENTS

Next, exemplary embodiments of the present invention will be described in detail with reference to the drawings.

### [First Exemplary Embodiment]

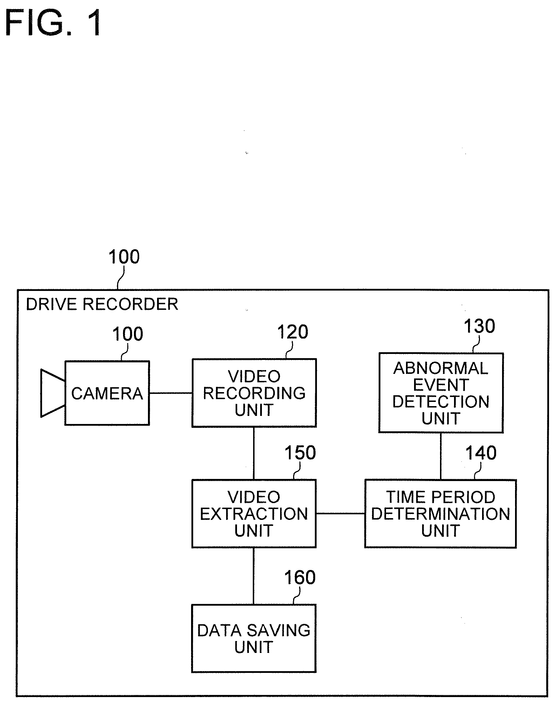

Fig. 1 is a block diagram of a drive recorder according to a first exemplary embodiment of the present invention. Referring to Fig. 1, a drive recorder 100 according to the present exemplary embodiment is mounted on a vehicle such as an automobile, and has a function of recording the driving condition of the vehicle. The drive recorder 100 includes a camera 110, a video recording unit 120, an abnormal event detection unit 130, a time period determination unit 140, a video extraction unit 150, and a data saving unit 160.

The camera 110 captures a video of a front side in a traveling direction of the vehicle at a predetermined frame rate. As the camera 110, a charge-coupled device (CCD) camera or a complementary MOS (CMOS) camera may be used, for example.

The video recording unit 120 has a function of recording, on a recording medium, a video captured by the camera 110 while adding capturing time-of-day information thereto. As the recording medium, a readable/writable memory card (e.g., SD card), a magnetic disk, or the like may be used, for example. The video recording unit 120 performs writing of a video from the head of a buffer area set in the recording medium, and when writing is completed up to the end of the buffer area, returns to the head and performs writing again. A maximum video time that can be recorded in the buffer area is determined depending on the image quality, frame rate, and the capacity of the buffer area. The video recording unit 120 can be implemented by a dedicated hardware, or by a general-purpose processor, a memory, and a program, for example.

The abnormal event detection unit 130 has a function of detecting an abnormal event. When the abnormal event detection unit 130 detects an abnormal event, the abnormal event detection unit 130 notifies the time period determination unit 140 of abnormal event detection information including the detection time of day thereof. The abnormal event detection unit 130 may be implemented by a dedicated hardware, or by a general-purpose processor, a memory, and a program, for example.

The time period determination unit 140 has a function of determining a time period of the video to be saved. When the time period determination unit 140 is notified of the abnormal event detection information from the abnormal event detection unit 130, the time period determination unit 140 determines a time period that includes the time of day when the abnormal event is detected and that has a predetermined time length. The time period determination unit 140 determines a predetermined time length based on the traveling condition other than the speed of the vehicle. The time period determination unit 140 notifies the video extraction unit 150 of the determined time period. The time period determination unit 140 can be implemented by a dedicated hardware, or by a general-purpose processor, a memory, and a program, for example.

The video extraction unit 150 has a function of extracting a video of the time period notified from the time period determination unit 140, from the video recording unit 120. The video extraction unit 150 notifies the data saving unit 160 of the extracted video and the information of the time period. The video extraction unit 150 can be implemented by a dedicated hardware, or by a general-purpose processor, a memory, and a program, for example.

The data saving unit 160 creates a file that includes the video extracted by the video extraction unit 150 and information of the time period, and records it on a recording medium as an erasure prohibited object. The data saving unit 160 also transmits the created file to an external device by using a communication device, not illustrated, provided to the drive recorder 100. The data saving unit 160 can be implemented by a dedicated hardware, or by a general-purpose processor, a memory, and a program, for example. The data saving unit 160 can also be implemented by an SD card having a wireless communication function such as Wi-Fi or Bluetooth (registered trademark).

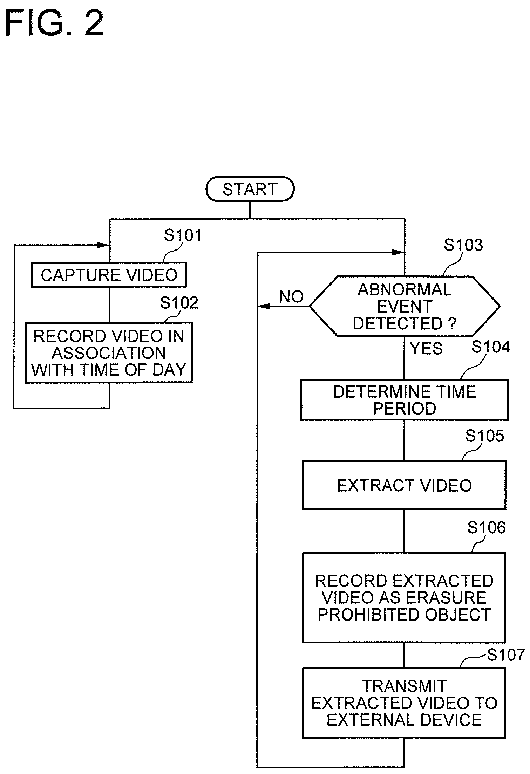

Fig. 2 is a flowchart illustrating an exemplary operation of the drive recorder 100 according to the present exemplary embodiment. Hereinafter, operation of the drive recorder 100 will be described with reference to Fig. 2.

When the ignition switch of the vehicle is turned on, the drive recorder 100 starts operation illustrated in Fig. 2.

First, the camera 110 of the drive recorder 100 starts operation to capture a video of the front side in the traveling direction of the vehicle at a predetermined frame rate (step S101). Then, the video recording unit 120 starts operation to record the video captured by the camera 110 in the buffer area of the recording medium, in association with capturing time-of-day information (step S102). The capturing of the video by the camera 110 and the recording of the video by the video recording unit 120 are continued until the ignition switch of the vehicle is turned off.

On the other hand, in parallel with the operation described above, the operation described below is performed. First, the abnormal event detection unit 130 detects presence or absence of an abnormal event (step S103). When the abnormal event detection unit 130 detects an abnormal event, the abnormal event detection unit 130 notifies the time period determination unit 140 of abnormal event detection information including the time of day when it is detected. When the time period determination unit 140 is notified of the abnormal event detection information, the time period determination unit 140 determines a time period having a predetermined time length and including the time of day when the abnormal event is detected, based on the traveling condition other than the speed of the vehicle (step S104). Then, the time period determination unit 140 notifies the video extraction unit 150 of the determined time period. The video extraction unit 150 extracts a video of the notified time period from the video recording unit 120 (step S105). Then, the video extraction unit 150 notifies the data saving unit 160 of the extracted video and the information of the time period. The data saving unit 160 creates a file including the video extracted by the video extraction unit 150 and the information of the time period, and records it on the recording medium as an erasure prohibited object (S106), and transmits the file to an external device (S107).

As described above, according to the present embodiment, it is possible to save necessary video information without excess and deficiency. This is because the time period of the video to be saved is determined based on the traveling condition other than the speed of the vehicle.

Next, the abnormal event detection unit 130 will be described in more detail.

### <Example 1 of abnormal event detection unit 130>

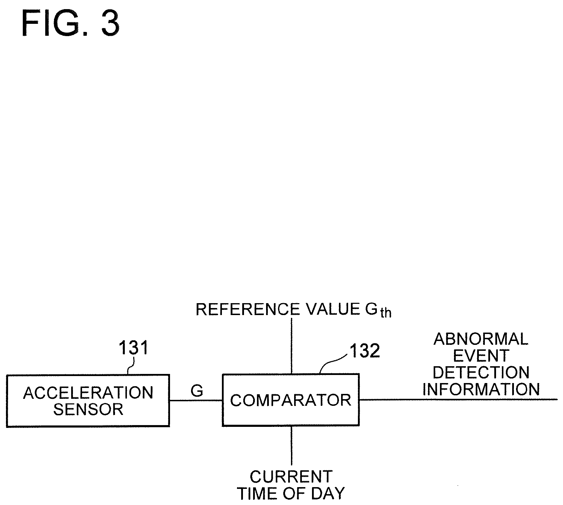

Fig. 3 is a block diagram illustrating an example of the abnormal event detection unit 130. The abnormal event detection unit 130 of this example includes an acceleration sensor 131 and a comparator 132. The acceleration sensor 131 detects acceleration G of the vehicle, and outputs the detected result to the comparator 132. The acceleration sensor 131 is preferably capable of detecting acceleration of at least two axes namely the front and rear left and right axes. The comparator 132 compares the acceleration G of the vehicle detected by the acceleration sensor 131 with a reference value Gₜₕ, and outputs abnormal event detection information including the current time of day when the acceleration G exceeds the reference value Gₜₕ.

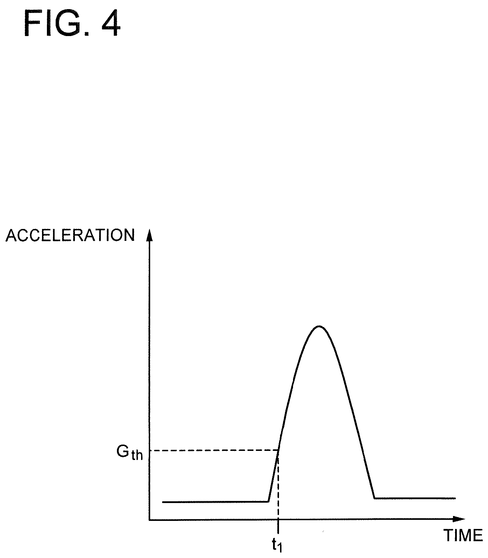

Fig. 4 is a graph illustrating an example of a temporal change in the acceleration G of the vehicle detected by the acceleration sensor 131. A curve indicated by a solid line represents the detected acceleration G, and a straight line indicated by a broken line represents the reference value Gₜₕ. The comparator 132 compares the acceleration G with the reference value Gₜₕ, and outputs the abnormal event detection information including a time-of-day t1 when the acceleration G exceeds the reference value Gₜₕ.

### <Another example of abnormal event detection unit 130>

In the example described above, the abnormal event detection unit 130 detects an abnormal event based on the acceleration of the vehicle. However, the abnormal event detection unit 130 may detect an abnormal event based on another type of information such as speed of the vehicle, for example. For example, the abnormal event detection unit 130 compares the speed of the vehicle detected by the vehicle speed sensor with the legal speed limit of the place, and when the vehicle speed exceeds the legal speed limit by a predetermined value or more, the abnormal event detection unit 130 outputs abnormal event detection information including the current time of day of that time point. The legal speed limit of the traveling place can be obtained by means of a method of recognizing an image of a road sign captured by the camera 110, a method of acquiring it from car navigation, or the like. Furthermore, the abnormal event detection unit 130 may detect an abnormal event based on biological information of the driver. For example, the abnormal event detection unit 130 compares biological information (one or a combination of body temperature, blood pressure, heart rate, blood glucose, used calories, brain waves, oxygen concentration, expiration, posture, and the like, for example) of the driver detected by a biological sensor, with normal values, and when the biological information is out of the normal values, the abnormal event detection unit 130 outputs abnormal event detection information including the current time of day of that time point.

Next, the time period determination unit 140 will be described in more detail.

### <Example 1 of time period determination unit 140>

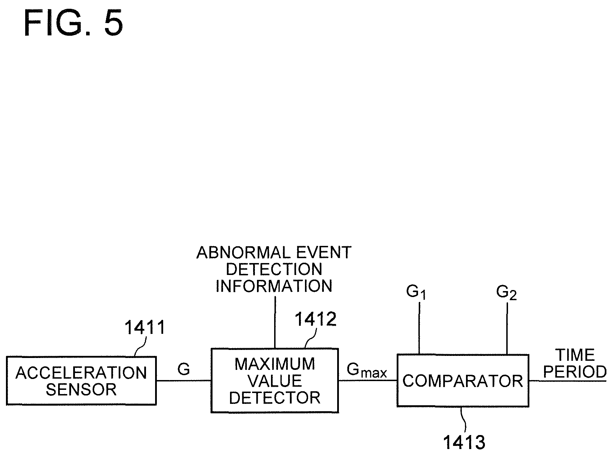

Fig. 5 is a block diagram illustrating an example of the time period determination unit 140. The time period determination unit 140 of this example includes an acceleration sensor 1411, a maximum value detector 1412, and a comparator 1413. The acceleration sensor 1411 detects the acceleration G of the vehicle, and outputs the detected result to the maximum value detector 1412. It is preferable that the acceleration sensor 1411 is capable of detecting acceleration of at least two axes namely the front and rear left and right axes. The maximum value detector 1412 detects a maximum value Gₘₐₓ in a period from the occurrence time of day of an abnormal event indicated by abnormal event detection information until the magnitude of the acceleration detected by the acceleration sensor 1411 reaches near a value 0, or in a period from the occurrence time of day of an abnormal event until a predetermined time elapses, and outputs the detection result to the comparator 1413. The comparator 1413 compares the maximum value Gₘₐₓ with preset reference values G1 and G2 (G1 < G2), and outputs information of the time period corresponding to the comparison result. Specifically, the comparator 143 determines that when Gₘₐₓ < G1, a time period T1 is set, when G1 ≤ Gₘₐₓ < G2, a time period T2 is set, and when G2 ≤ Gₘₐₓ, a time period T3 is set. Here, the time period T1 represents a time period from a time-of-day t1-a to a time-of-day t1+b. The time period T2 represents a time period from a time-of-day t1-c to a time-of-day t1+d. The time period T3 represents a time period from a time-of-day t1-e to time-of-day t1+f. The time-of-day t1 represents the time of day when an abnormal event is detected. Further, a, b, c, d, e, and f are constants, and (a + b) < (c + d) < (e + f). Further, a = b, c = d, and e = f may be satisfied, a < b, c < d, and e < f may be satisfied, or a > b, c > d, and e > f may be satisfied.

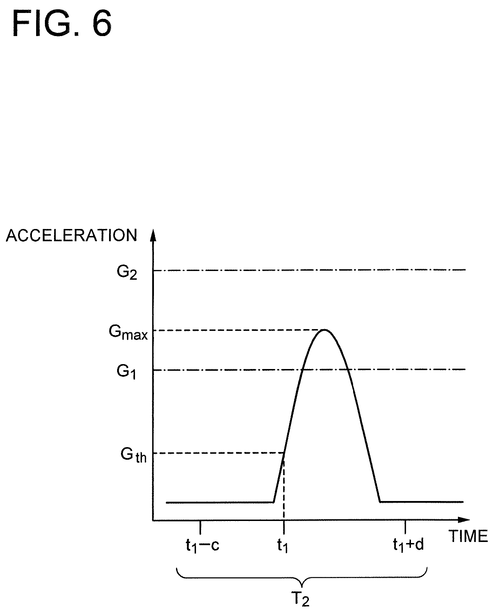

Fig. 6 is a graph illustrating an example of a temporal change in the acceleration G of the vehicle detected by the acceleration sensor 1411. A curve indicated by a solid line represents the detected acceleration G. Gₜₕ is a reference value used for detecting an abnormal event by the abnormal event detection unit 130. Gₘₐₓ is a maximum value of acceleration detected by the maximum value detector 1412. G1 and G2 are reference values given to the comparator 1413. In the case of Fig. 6, as G1 ≤ Gmax < G2, the comparator 1413 outputs the time period T2 from the time-of-day t1-c to the time-of-day t1+d.

The time period determination unit 140 illustrated in Fig. 5 determines the length of a time period based on the magnitude of the acceleration of the vehicle. Therefore, it is possible to save a video of a longer time period for an accident having larger acceleration, that is, a larger-scale accident, even though the speed immediately before the collision is the same. This makes it possible to analyze the cause of an accident for a critical accident more reliably. In addition, it is possible to grasp the effect of a large-scale accident over a relatively long time.

### <Example 2 of time period determining section 140>

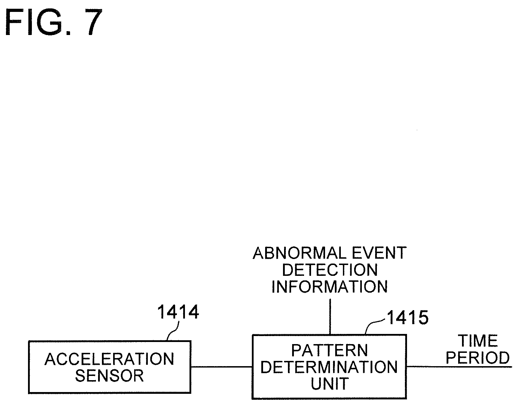

Fig. 7 is a block diagram illustrating another example of the time period determination unit 140. The time period determination unit 140 of this example includes an acceleration sensor 1414 and a pattern determination unit 1415. The acceleration sensor 1414 detects the acceleration G of the vehicle, and outputs the detected result to the pattern determination unit 1415. It is preferable that the acceleration sensor 1411 is capable of detecting acceleration of at least two axes namely the front and rear left and right axes. The pattern determination unit 1415 determines a change pattern of acceleration detected by the acceleration sensor 1414. The pattern determination unit 1415 also determines and outputs a time period including the occurrence time of day of the abnormal event indicated by the abnormal event detection information and having a length determined based on the determination result.

The pattern determination unit 1415 determines a change pattern of the acceleration based on the detection result of the acceleration G output from the acceleration sensor 1414 during a predetermined period. As the predetermined period, the pattern determination unit 1415 may use a predetermined period around the occurrence time of day of the abnormal event indicated by the abnormal event detection information, for example. Thereby, the length of the time period can be determined based on a short-term change pattern of the acceleration at the time point when the abnormal event is detected. For example, it is possible to measure a time from the occurrence time of day of an abnormal event until the value of the acceleration becomes almost 0, and determine a longer time period as the time becomes longer.

As the predetermined period, the pattern determination unit 1415 may also use a period from when the ignition switch is turned on immediately before until the occurrence time of day of the abnormal event indicated by the abnormal event detection information, for example. Thereby, it is possible to determine the length of a time period based on a long-term change pattern of acceleration up to the time point when the abnormal event is detected. For example, the driving tendency of the driver may be determined based on the number of times that sudden acceleration and sudden deceleration are made, and in the case of a so-called rough driver, a time period may be set to be longer as compared with the other drivers.

### <Example 3 of time period determination unit 140>

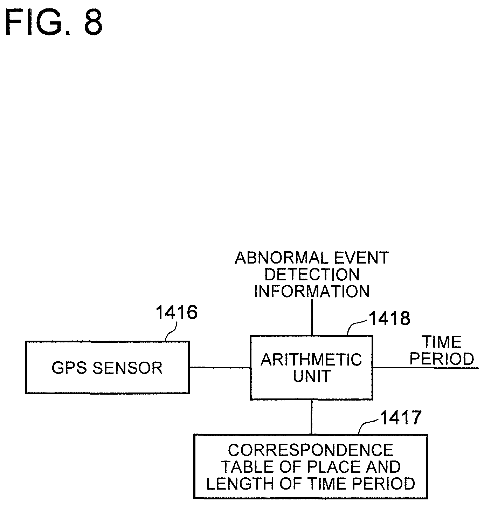

Fig. 8 is a block diagram illustrating another example of the time period determination unit 140. The time period determination unit 140 of this example includes a global positioning system (GPS) sensor 1416, and a correspondence table 1417 of the place and the length of a time period, and an arithmetic unit 1418. The GPS sensor 1416 detects the longitude and the latitude representing the current position of the vehicle based on signals received from GPS satellites, and outputs the detection result to the arithmetic unit 1418. The correspondence table 1417 of the place and the length of a time period contains one or more sets of place information defined by the longitude and the latitude and information of the length of a time period of that place. The arithmetic unit 1418 searches the correspondence table 1417 of the place and the length of a time period by using, as a key, the longitude and the latitude representing the current position of the vehicle detected by the GPS sensor 1416, and based on the search result, determines and output a time period including the occurrence time of day of the abnormal event indicated by the abnormal event detection information and having a length corresponding to the current position of the vehicle.

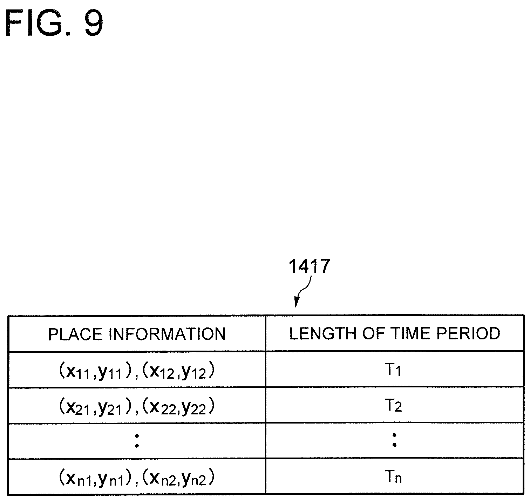

Fig. 9 is a diagram illustrating an example of the correspondence table 1417 of the place and the length of a time period. The correspondence table 1417 of this example contains sets of place information defined by two points (e.g., end points of upper left and lower right of a rectangular area) and the length of a time period to be used at that place. For example, on the second line, it is stored that at a place in a rectangular area in which a point represented by longitude x11 and latitude y11 and a point represented by longitude x12 and latitude y12 are the end points of upper left and lower right, the length of a time period is T1.

The arithmetic unit 1418 searches the correspondence table 1417 for position information in which the position of the vehicle defined by the latitude and the longitude detected by the GPS sensor 1416 is included in the rectangular area. Then, when the search succeeded, the arithmetic unit 1418 outputs a time period including the occurrence time of day of the abnormal event indicated by the abnormal event detection information and and having a length stored in the correspondence table 1417 corresponding to the searched place information. Meanwhile, when the search failed, the arithmetic unit 1418 outputs a time period that includes the occurrence time of day of the abnormal event indicated by the abnormal event detection information and that has a preset standard length.

The place information recorded on the correspondence table 1417 may be a place where accidents occur frequently, and the length of a time period corresponding thereto may be a value longer than the standard. Thereby, it is possible to save a video of a longer time at the point of place where accidents occur frequently, compared with other points of place. Further, the place information recorded on the correspondence table 1417 may be a place where saving of a video is not needed, for example, and the length of a time period corresponding thereto may be a value 0. The place where saving of a video is not needed may include, in the case where a vehicle is a transportation track of a certain company, for example, a place within the premises of the company. In the case where there are many uneven portions in the company's premises, it is possible to prevent a large amount of video from being saved wastefully each time a transportation track passes through the uneven road.

### <Example 4 of time period determination unit 140>

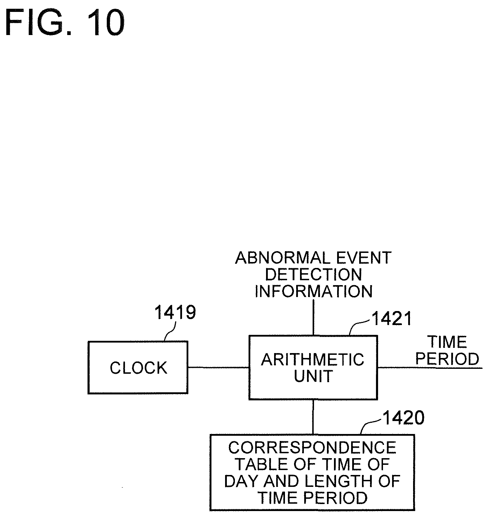

Fig. 10 is a block diagram illustrating another example of the time period determination unit 140. The time period determination unit 140 of this example include a clock 1419, a correspondence table 1420 of the time of day and the length of a time period, and an arithmetic unit 1421. The clock 1419 outputs the current time of day to the arithmetic unit 1421. The correspondence table 1420 of the time of day and the length of a time period contains one or more sets of time-of-day information defined by the time of day and information of the length of a time period at that time of day. The arithmetic unit 1421 searches the correspondence table 1420 of the time of day and the length of a time period by using the current time of day detected by the clock 1419 as a key, and based on the search result, determines and outputs a time period that includes the occurrence time of day of the abnormal event indicated by the abnormal event detection information and that has a length corresponds to the current time of day.

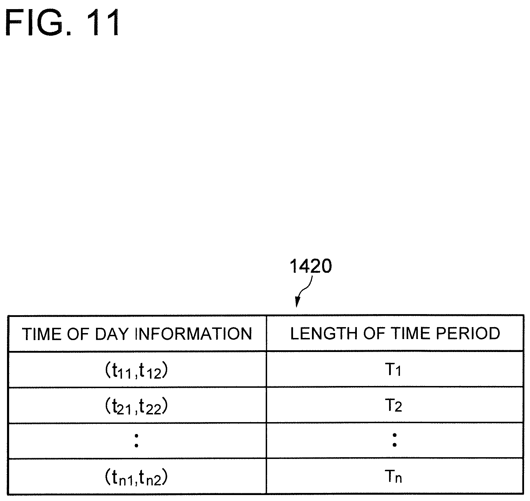

Fig. 11 is a diagram illustrating an example of the correspondence table 1420 of the time of day and the length of a time period. The correspondence table 1420 of this example contains sets of time-of-day information defined by the start time of day and the end time of day and the length of a time period to be used at the time of day in the section. For example, on the second line, it is stored that the length of a time period is set toT1 in a section from a start time-of-day t11 to an end time-of-day t12.

The arithmetic unit 1421 searches the correspondence table 1420 for time-of-day information in which the current time of day detected by the clock 1419 is included in the section. Then, when the search succeeded, the arithmetic unit 1421 outputs a time period that includes the occurrence time of day of the abnormal event indicated by the abnormal event detection information and that has a length stored in the correspondence table 1420 corresponding to the searched time-of-day information. Meanwhile, when the search failed, the arithmetic unit 1420 outputs a time period that includes the occurrence time of day of the abnormal event indicated by the abnormal event detection information and that has a preset standard length.

The time-of-day information to be recorded on the correspondence table 1420 may be the time of day at which accidents occur frequently, for example, and the length of the time period corresponding thereto may be a value longer than the standard. Thereby, it is possible to save the video of a longer time at the time of day when accidents occur frequently, compared with other time of day. The time-of-day information to be recorded on the correspondence table 1420 may be the time of day representing the night, for example, and the length of the time period corresponding thereto may be a value longer than the standard. Thereby, it is possible to save a video of a longer time than the standard, in the case of an abnormal event such as an accident that occurs at night of low visibility.

### <Example 5 of time period determination unit 140>

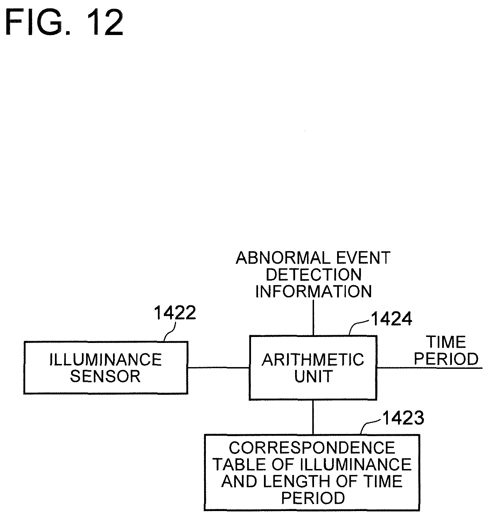

Fig. 12 is a block diagram illustrating another example of the time period determination unit 140. The time period determination unit 140 of this example includes an illuminance sensor 1422, a correspondence table 1423 of the illuminance and the length of a time period, and an arithmetic unit 1424. The illuminance sensor 1422 detects the current illuminance around the vehicle, and outputs the detected result to the arithmetic unit 1424. The correspondence table 1423 of the illuminance and the length of a time period contains one set or more sets of illuminance information defined by the illuminance and information of the length of a time period in the illuminance. The arithmetic unit 1424 searches the correspondence table 1423 of the illuminance and the length of a time period by using the illuminance detected by the illuminance sensor 1422 as a key, and based on the search result, the arithmetic unit 1424 determines and outputs the time period that includes the occurrence time of day of the abnormal event indicated by the abnormal event detection information and that has a length corresponds to the current illuminance.

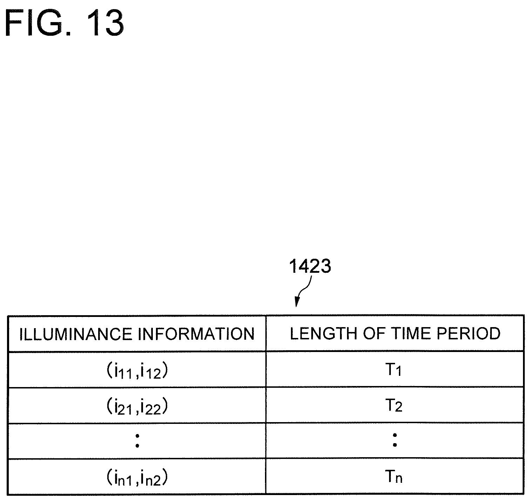

Fig. 13 is a diagram illustrating an example of the correspondence table 1423 of the illuminance and the length of a time period. The correspondence table 1423 contains sets of illuminance information defined by the lower limit illuminance and the upper limit illuminance, and the length of a time period used with the illuminance of the section. For example, on the second line, it is stored that the length of a time period is T1 in the section from lower limit illuminance i11 to upper limit luminance i12.

The arithmetic unit 1424 searches the correspondence table 1423 for illuminance information in which the illuminance detected by the illuminance sensor 1422 is included in the section. Then, when the search succeeded, the arithmetic unit 1424 outputs the time period that includes the occurrence time of day of the abnormal event indicated by the abnormal event detection information and that has a length stored in the correspondence table 1423 corresponding to the searched time-of-day information. Meanwhile, when the search failed, the arithmetic unit 1424 outputs the time period that includes the occurrence time of day of the abnormal event indicated by the abnormal event detection information and that has a preset standard length.

The Illuminance information to be recorded on the correspondence table 1423 may be illuminance with which accidents occur frequently, for example, and the length of the time period corresponding thereto may be a length longer than the standard. Thereby, with the illuminance in which accidents occur frequency (e.g., illuminance in which it is hesitated whether or not to light the headlamp), it is possible to store a video of a longer time than other points of place. Further, the time-of-day information to be recorded on the correspondence table 1420 may be illuminance at night or in a dark tunnel, for example, and the length of the time period corresponding thereto may be a value longer than the standard. Thereby, in the case of an abnormal event such as an accident that occurred at night or in a tunnel of low visibility, it is possible to store a video of a longer time than the standard.

### <Example 6 of time period determining section 140>

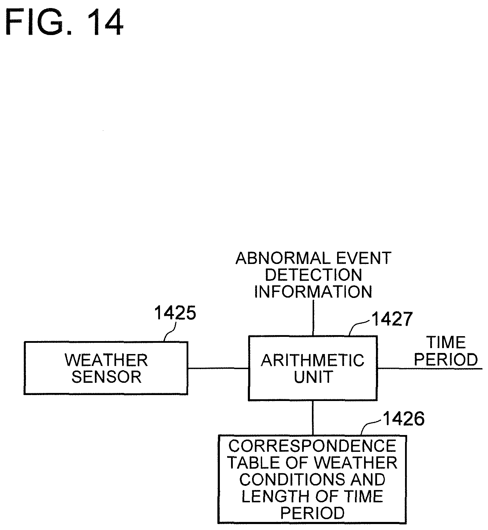

Fig. 14 is a block diagram illustrating another example of a time period determination unit 140. The time period determination unit 140 of this example includes a weather sensor 1425, a correspondence table 1426 of the weather conditions and the length of a time period, and an arithmetic unit 1427. The weather sensor 1425 detects weather conditions at the point of place where the vehicle travels, and outputs the detection result to the arithmetic unit 1424. The weather conditions include one or a combination of temperature, humidity, wind speed, weather (sunny, rain, snow, cloudy, etc.), and the like. The weather sensor 1425 may be one that senses the weather conditions by itself, or one that is connected with a server device that provides the weather conditions, and acquires the weather conditions of the point of place where the own vehicle is traveling through a network. The point of place where the own vehicle is traveling can be acquired from a car navigation system mounted on a vehicle, for example. The correspondence table 1426 of the weather conditions and the length of a time period contains one or more sets of weather condition information defined by the weather conditions and information of the length of a time period under such weather conditions. The arithmetic unit 1427 searches the correspondence table 1426 of the weather conditions and the length of a time period by using the weather conditions detected by the weather sensor 1425 as a key, and based on the search result, determines and outputs the time period that includes the occurrence time of day of the abnormal event indicated by the abnormal event detection information and that has a length corresponding to the weather conditions of the current point of place.

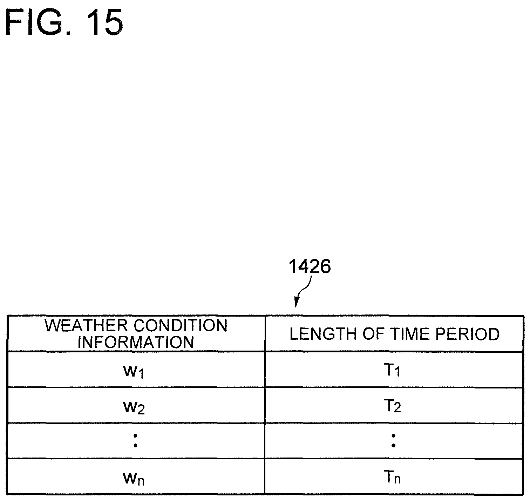

Fig. 15 is a diagram illustrating an example of a correspondence table 1426 of the weather conditions and the length of a time period. The correspondence table 1426 of this example contains sets of the weather condition information defined by one or a plurality of weather conditions and the length of a time period used under such weather conditions. For example, on the second line, it is stored that at the point of place of a weather condition w1, the length of a time period is T1.

The arithmetic unit 1427 searches the correspondence table 1426 for weather condition information that matches the weather conditions detected by the weather sensor 1425. Then, when the search succeeded, the arithmetic unit 1427 outputs a time period that includes the occurrence time of day of the abnormal event indicated by the abnormal event detection information, and that has a length stored in the correspondence table 1426 corresponding to the searched weather condition information. Meanwhile, when the search failed, the arithmetic unit 1427 outputs a time period that includes the occurrence time of day of the abnormal event indicated by the abnormal event detection information and that has a preset standard length.

The weather condition information to be recorded on the correspondence table 1426 may be rain in which accidents occur frequently, for example, and the length of the time period corresponding thereto may be a value longer than the standard. Thereby, in the case where the vehicle travels in the rain in which accidents frequently occur, a video of a longer time can be stored compared with the case of sunny weather. Also, the weather condition information recorded on the correspondence table 1426 may be a combination of rain and wind of a certain value or higher, for example, and the length of the time period corresponding thereto may be longer than the standard. Thereby, in the case of an abnormal event such as an accident that occurred in strong wind and rain such as typhoon, it is possible to save a video of a longer time than the standard.

### <Example 7 of time period determination unit 140>

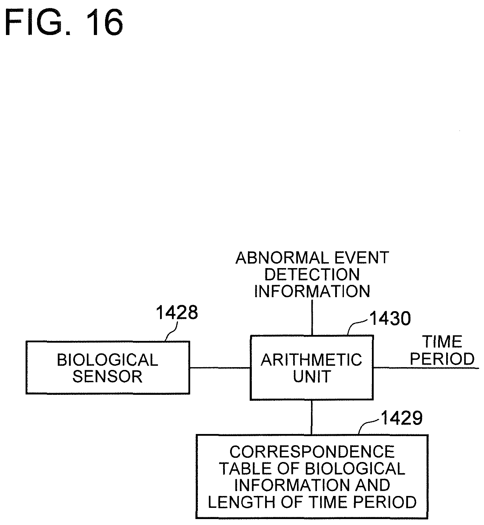

Fig. 16 is a block diagram illustrating the time period determination unit 140 according to an example of the invention. The time period determination unit 140 of this example includes a biological sensor 1428, a correspondence table 1429 of biological information and the length of a time period, and an arithmetic unit 1430. The biological sensor 1428 detects biological information of the driver (operator) of the vehicle, and outputs the detection result to the arithmetic unit 1430. The biological information includes one or a combination of body temperature, blood pressure, heart rate, blood glucose level, consumed calories, brain waves, oxygen concentration, expiration, posture, and the like. The biological sensor 1428 may be a wearable sensor for sensing biological information in real time by itself, or may be one that is connected with a server that provides biological information of the driver, and acquires recent biological information of the driver through a network. The correspondence table 1429 of the biological information and the length of a time period contains one or more sets of biological information and information of the length of a time period relating to the biological information. The arithmetic unit 1430 searches the correspondence table 1429 of the biological information and the length of a time period by using the biological information detected by the biological sensor 1428, and based on the search result, determines and outputs a time period that includes the occurrence time of day of the abnormal event indicated by the abnormal event detection information and that has a length corresponding to the biological information of the driver.

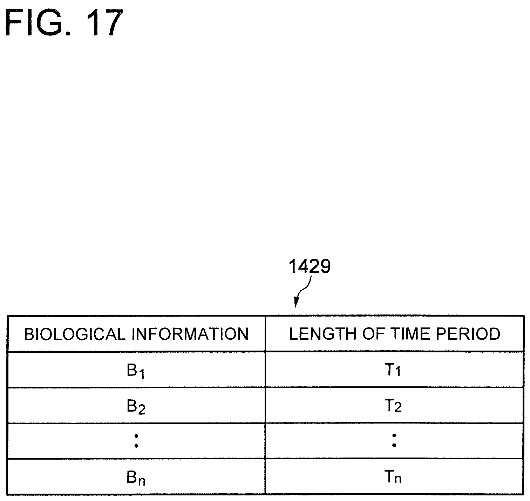

Fig. 17 is a diagram illustrating an example according to the invention of a correspondence table 1429 of biological information and the length of a time period. The correspondence table 1429 of this example contains one or more sets of biological information and the length of a time period used in the biological information. For example, on the second line, it is stored that for biological information B1, the length of a time period is T1.

The arithmetic unit 1430 searches the correspondence table 1429 for biological information that matches the biological information detected by the biological sensor 1428. Then, when the search succeeded, the arithmetic unit 1430 outputs a time period that includes the occurrence time of day of the abnormal event indicated by the abnormal event detection information and that has a length stored in the correspondence table 1429 corresponding to the searched biological information. Meanwhile, when the search failed, the arithmetic unit 1430 outputs a time period that includes the occurrence time of day of the abnormal event indicated by abnormal event detection information and that has a preset standard length.

The biological information recorded on the correspondence table 1429 is one of or a combination of body temperature, blood pressure, heart rate, blood glucose level, consumed calories, brain waves, oxygen concentration, expiration, posture, and the like that are out of normal values. The length of a time period corresponding thereto may be a value longer than the standard. Thereby, when the driver is operating in a state of poor physical condition, it is possible to save a video of a longer time than usual.

### <Another example of time period determination unit 140>

In the above example, the time period determination unit 140 determines the length of a time period of a video signal to be saved based on the magnitude of acceleration of the vehicle, a change pattern in the acceleration of the vehicle, the traveling location of the vehicle, the time of day when an abnormal event is detected, illuminance around the vehicle, weather conditions, or biological information of the driver of the vehicle. However, it is also possible to determine the length of a time period based on another type of information, that is, a road width, the number of persons existing in front, presence or absence of conversation in the vehicle, or the like. Furthermore, the time period determination unit 140 may determine the length of a time period based on a combination of the aforementioned information and the vehicle speed.

Next, the data saving unit 160 will be described in more detail.

### <Example 1 of data saving unit 160>

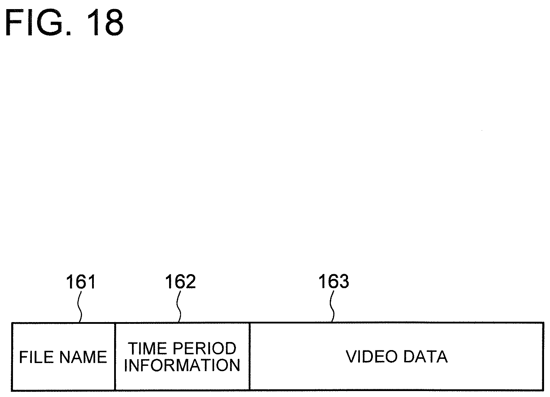

Fig. 18 is a diagram illustrating an exemplary format of a file created by the data saving unit 160. In this example, the data saving unit 160 creates a file having a file name 161, time period information 162, and video data 163. The file name 161 may be any character string as long as it is uniquely identifiable. The time period information 162 is information of a time period determined by the time period determination unit 140. The video data 163 is a video extracted by the video extraction unit 150. According to this format, the video data 163 can be uniquely identified by the file name 161. Further, according to this format, as the time period information 162 is provided independently, it is possible to immediately recognize the time period that the video data 163 is captured by referring to the time period information 162. However, in addition to providing the time period information 162 independently, it is also possible to add time-of-day information to each video frame of the video data 163.

### <Example 2 of data saving unit 160>

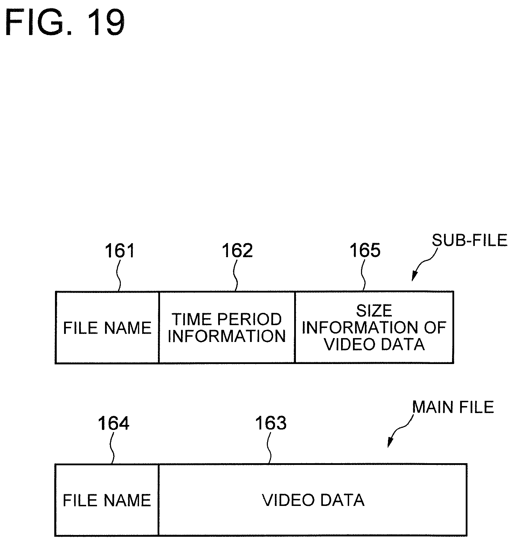

Fig. 19 is a diagram illustrating another exemplary format of a file created by the data saving unit 160. In this example, the data saving unit 160 creates two types of files. One is a file having the file name 161, the time period information 162, and size information 165 of video data. Hereinafter, this file is referred to as a sub-file. The other one is a file having a file name 164 and the video data 163. Hereinafter, this file is referred to as a main file. The file name 161 and the file name 164 are configured such that different branch numbers are added to the same file name. For example, in the case where the same file name is AAA and branch numbers are 1 and 2, the file name 161 is AAA-1 and the file name 164 is AAA-2. The size information 165 of the video data represents the size of the video data 163. According to this format, the time period information 162 and the size information of the video data, and the video data 163 can be recorded and transmitted as separate files. Further, according to this format, it is possible to mechanically determine the file name 164 of the main file from the file name 161 of the sub-file. On the contrary, it is also possible to mechanically determine the file name 161 of the sub-file from the file name 164 of the main file.

### [Second Exemplary Embodiment]

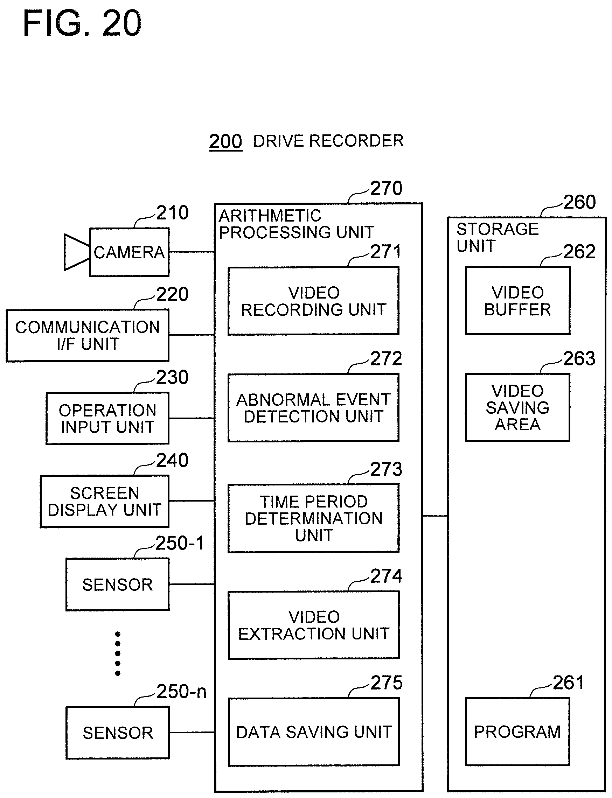

Next, a second exemplary embodiment, which does not form part of the invention will be described. Fig. 20 is a block diagram of a drive recorder according to the present exemplary embodiment. Referring to Fig. 20, a drive recorder 200 according to the present embodiment is mounted on a vehicle such as an automobile, and has a function of recording the driving condition of the vehicle. The drive recorder 200 includes a camera 210, a communication I/F unit (communication interface unit) 220, an operation input unit 230, a screen display unit 240, sensors 250-1 to 250-n, a storage unit 260, and an arithmetic processing unit 270.

The camera 210 has the same function as that of the camera 110 of Fig. 1. The communication I/F unit 220 is configured of a dedicated data communication circuit, and has a function of performing data communication with an external device connected via a wireless communication line, for example. The operation input unit 230 is configured of an operation input device such as operation buttons, and has a function of detecting an operation by an operator and outputting it to the arithmetic processing unit 270. The screen display unit 240 is configured of a screen display device such as an LCD or PDP, and has a function of displaying, on a screen, various kinds of information such as a monitor screen of the camera 210, according to an instruction from the arithmetic processing unit 270. The sensors 250-1 to 250-n include an acceleration sensor, a vehicle speed sensor, a GPS sensor, a time-of-day sensor (clock), an illuminance sensor, a weather sensor, a biological sensor, and the like.

The storage unit 260 is configured of a storage device such as a hard disk or a memory, and has a function of storing processing information, a storage area, and a program 261 necessary for various kinds of processing performed in the arithmetic processing unit 270. The program 261 is a program for implementing various processing unit by being read into the arithmetic processing unit 270 and executed, and is read in advance from an external device (not illustrated) or a storage medium (not illustrated) via a data input/output function such as the communication I/F unit 220, and is saved in the storage unit 260. The main processing information and the storage area, stored in the storage unit 260, include a video buffer 262 and a video saving area 263.

The video buffer 262 is a storage area for temporarily storing the video captured by the camera 210. The image saving area 263 is a storage area for recording a video extracted from the video buffer 262 as an erasure prohibited object.

The arithmetic processing unit 270 includes a microprocessor such as a CPU and its peripheral circuits, and has a function of reading the program 261 from the storage unit 260 and executing it to implement various types of processing units by allowing the hardware and the program 261 to cooperate with each other. The main processing units implemented by the arithmetic processing unit 270 include a video recording unit 271, an abnormal event detection unit 272, a time period determination unit 273, a video extraction unit 274, and a data saving unit 275.

The video recording unit 271 has a function of recording a video captured by the camera 210 in the video buffer 262 in association with the time of day. In addition, the video recording unit 271 also has the same function as that of the video recording unit 120 of Fig. 1.

The abnormal event detection unit 272 has a function of detecting an abnormal event based on the detection results of the sensors 250-1 to 250-n. In addition, the abnormal event detection unit 272 also has the same function as that of the abnormal event detection unit 130 of Fig. 1.

The time period determination unit 273 has a function of determining a time period that includes the time of day when the abnormal event detection unit 272 detects an abnormal event and that has a length determined based on the driving condition other than the speed of the vehicle. In addition, the time period determination unit 273 also has the same function as that of the time period determination unit 140 of Fig. 1.

The video extraction unit 274 has a function of extracting a video of a time period determined by the time period determination unit 273, from the video buffer 262. In addition, the video extraction unit 274 also has the same function as that of the video extraction unit 150 of Fig. 1.

The data saving unit 275 has a function of recording the video extracted by the video extraction unit 274 as an erasure prohibited object, in the video saving area 263. Further, the data saving unit 273 has a function of transmitting the video extracted by the video extraction unit 274, to an external device through the communication I/F unit 220. The data saving unit 275 can be implemented by an SD cart having a wireless communication function such as Wi-Fi or Bluetooth (registered trademark), for example, together with the communication I/F unit 220, the video buffer 262, and the video saving area 263.

Next, operation of the drive recorder 200 will be described with reference to Fig. 2.

When the ignition switch of the vehicle is turned on, the drive recorder 200 starts operation illustrated in Fig. 2.

First, the camera 210 of the drive recorder 200 starts operation of capturing a video of the front side in the traveling direction of the vehicle at a predetermined frame rate (step S101). Then, the video recording unit 271 starts operation of recording the video captured by the camera 210 in the video buffer 262 in association with capturing time-of-day information (step S102). Capturing of the video by the camera 210 and recording of the video by the video recording unit 271 are continued until the ignition switch of the vehicle is turned off.

On the other hand, the operation described below is performed in parallel with the operation described above. First, the abnormal event detection unit 272 detects presence or absence of an abnormal event (step S103). When the abnormal event detection unit 272 detects an abnormal event, the abnormal event detection unit 272 notifies the time period determination unit 273 of the abnormal event detection information including the detection time of day. When the time period determination unit 273 is notified of the abnormal event detection information, the time period determination unit 273 determines a time period that includes the time of day when the abnormal event is detected and that has a predetermined time length, based on the traveling condition other than the speed of the vehicle (step S 104). Then, the time period determination unit 273 notifies the video extraction unit 274 of the determined time period. The video extraction unit 274 extracts a video of the notified time period from the video buffer 262 (step S105). Then, the video extraction unit 274 notifies the data saving unit 275 of the extracted video. The data saving unit 275 records, in the video saving area 263, a file including the video extracted by the video extraction unit 274 and information of the time period as an erasure prohibited object (S106), and transmits it to an external device through the communication I/F unit 220 (S107).

As described above, according to the present embodiment, it is possible to save necessary video information without excess and deficiency. This is because the time period of the video to be saved is determined based on the traveling condition other than the speed of the vehicle.

### [Third Exemplary Embodiment]

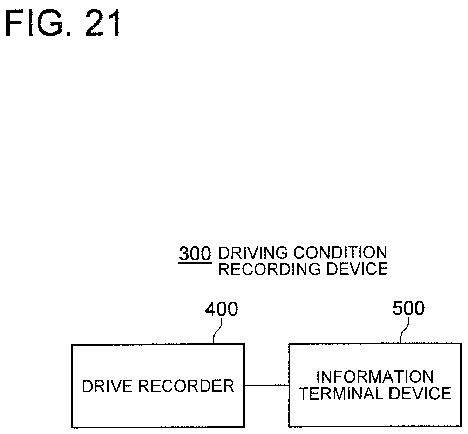

Next, a third exemplary embodiment, which does not form part of the invention will be described. Fig. 21 is a block diagram of a driving condition recording device 300 according to the present exemplary embodiment. Referring to Fig. 21, the driving condition recording device 300 includes a drive recorder 400 and an information terminal device 500.

The drive recorder 400 is mounted on a vehicle such as an automobile, and has a function of recording the driving condition of the vehicle. The drive recorder 400 records, on a recording medium, a video captured by a camera mounted on the vehicle in association with the time of day, and when detecting an abnormal event, extracts the video of a predetermined time period including the time of day when the abnormal event is detected from the recording medium, and transmits a file including the extracted video and information of the predetermined time period to the information terminal device 500 through wireless communication. As the drive recorder 400, the drive recorder 100 of Fig. 1 or the drive recorder 200 of Fig. 20 may be used, for example.

The information terminal device 500 acquires driving condition information of the vehicle, creates and records a file including the video received from the drive recorder 400 and the acquired driving condition information, or transmits it to an external device. More specifically, the information terminal device 500 acquires driving condition information of the vehicle and records it on a recording medium in association with the time of day. When receiving a file from the drive recorder 400, the information terminal device 500 extracts driving condition information of the time period that is the same as the information of the time period included in the received file, creates a file including the extracted driving condition information, the video included in the received file, and information of the predetermined time period, and records it as an erasure prohibited object or transmits it to an external device. The information terminal device 500 may be configured of a smart phone terminal, a personal computer, or the like, held by the driver who operates the vehicle.

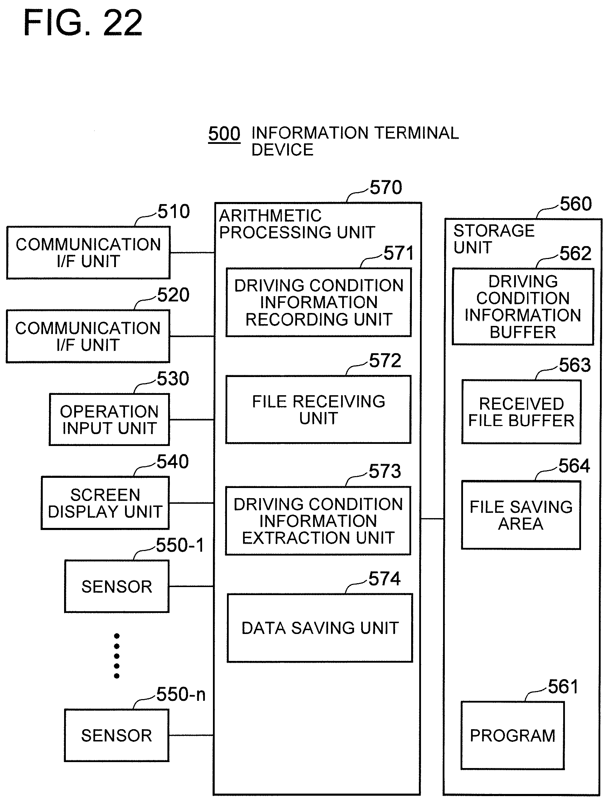

Fig. 22 is a block diagram illustrating an example of the information terminal device 500. Referring to Fig. 22, the information terminal device 500 of the present example includes communication interface units (communication I/F units) 510 and 520, an operation input unit 530, a screen display unit 540, sensors 550-1 to 550-n, a storage unit 560, and an arithmetic processing unit 570.

The communication I/F unit 510 is configured of a dedicated data communication circuit, and has a function of performing data communication with an external device such as a drive recorder 400 by wireless communication such as Wi-Fi or Bluetooth (registered trademark). The communication I/F unit 520 is configured of a dedicated data communication circuit, and has a function of performing data communication with an external device such as a server device, not illustrated, connected through a mobile communication network such as 3G or LTE. The operation input unit 530 is configured of an operation input device such as a keyboard, and has a function detecting an operation by an operator and outputting it to the arithmetic processing unit 570. The screen display unit 540 is configured of a screen display device such as an LCD or a PDP, and has a function of displaying various types of information such as a video on the screen, according to an instruction from the arithmetic processing unit 570. The sensors 550-1 to 550-n are sensors for acquiring driving condition information of the vehicle. The sensors 550-1 to 550-n include an acceleration sensor, a vehicle speed sensor, a GPS sensor, a time-of-day sensor (clock), an illuminance sensor, a weather sensor, a biological sensor, and the like, for example.

The storage unit 560 is configured of a storage device such as a hard disk, a memory, or the like, and has a function of storing processing information, a storage area, and a program 561 that are necessary for various kinds of processing performed in the arithmetic processing unit 570. The program 561 is a program for implementing various processing units by being read into the arithmetic processing unit 570 and executed, and is read in advance from an external device (not illustrated) or a storage medium (not illustrated) via a data input/output function such as the communication I/F units 510 and 520, and is saved in the storage unit 560. The main processing information and the storage area stored in the storage unit 560 include the driving condition information buffer 262, a received file buffer 563, and a file saving area 564.

The driving condition information buffer 262 is a storage area in which driving condition information acquired with use of the sensors 550-1 to 550-n are temporarily recorded. The received file buffer 563 is a storage area for temporarily storing a file received from the drive recorder 400. The file saving area 564 is a storage area for storing a file including driving condition information extracted from the driving condition information buffer 562, the video extracted from the received file buffer 563, and information of the time period, as an erasure prohibited object.

The arithmetic processing unit 570 includes a microprocessor such as a CPU and its peripheral circuits, and has a function of reading the program 561 from the storage unit 560 and executing it to thereby allow the hardware and the program 561 to cooperate with each other to implement various processing units. The main processing units implemented by the arithmetic processing unit 570 include a driving condition information recording unit 571, a file receiving unit 572, a driving condition information extraction unit 573, and a data saving unit 574.

The driving condition information recording unit 571 has a function of acquiring driving condition information with use of the sensors 550-1 to 550-n, and a function of recording the acquired driving condition information in the driving condition information buffer 562 in association with the time of day. For example, the driving condition information recording unit 571 measures acceleration of the vehicle by using an acceleration sensor, and records measured acceleration in the driving condition information buffer 562 in association with the time of day. Further, the driving condition information recording unit 571 measures the speed of the vehicle by using a vehicle speed sensor, and records the measured vehicle speed in the driving condition information buffer 562 in association with the time of day, for example. Further, the driving condition information recording unit 571 acquires the current position (latitude and longitude) of the vehicle by using a GPS sensor, and records the acquired position in the driving condition information buffer 562 in association with the time of day, for example. Further, the driving condition information recording unit 571 acquires illuminance inside and outside the vehicle by using an illuminance sensor, and records the acquired illuminance in the driving condition information buffer 562 in association with the time of day, for example. Further, the driving condition information recording unit 571 detects weather conditions of the point of place where the vehicle is traveling by using a weather sensor, and records the detection result in the driving condition information buffer 562 in association with the time of day, for example. The weather conditions include one or a combination of temperature, humidity, wind speed, weather (sunny, rain, snow, cloudy, etc.), and the like. The weather sensor may be one that senses weather conditions by itself, or one that acquires weather conditions of the point of place where the own vehicle is travelling by connecting with a server that provides weather conditions, through a network. Further, the driving condition information recording unit 571 acquires biological information of the driver by using a biological sensor, and records the acquired biological information in the driving condition information buffer 562 in association with the time of day, for example. The biological information includes one or a combination of body temperature, blood pressure, heart rate, blood glucose level, consumed calories, brain waves, oxygen concentration, expiration, posture, and the like.

The file receiving unit 572 has a function of receiving, via the communication I/F unit 510, a file including a video transmitted from the drive recorder 400 through Wi-Fi communication or the like and information of a time period, and records it in the received file buffer 563. Exemplary formats of a file including the video transmitted from the drive recorder 400 and the information of the time period are illustrated in Figs. 18 and 19.

The driving condition information extraction unit 573 has a function of reading, from the received file buffer 563, a file including information of the time period received from the drive recorder 400, and extracting the driving condition information of the same time period as that of the information of the time period from the driving condition information buffer 562.

The data saving unit 574 has a function of creating a file including the driving condition information extracted by the driving condition information extraction unit 573 and information including the video of the same time period recorded in the received file buffer 563 and the corresponding time period, and recording the created file in the file saving area 564 as an erasure prohibited object. The data saving unit 574 also has a function of transmitting the created file to a server device via the communication I/F unit 520 through a mobile communication network.

Next, operation of the driving condition recording device 300 will be described. As the operation of the drive recorder 400 constituting the driving condition recording device 300 is the same as the operation of the drive recorder 100 of Fig. 1 or the drive recorder 200 of Fig. 20, the description thereof is omitted. Hereinafter, operation of the information terminal device 500 constituting the driving condition recording device 300 will be described.

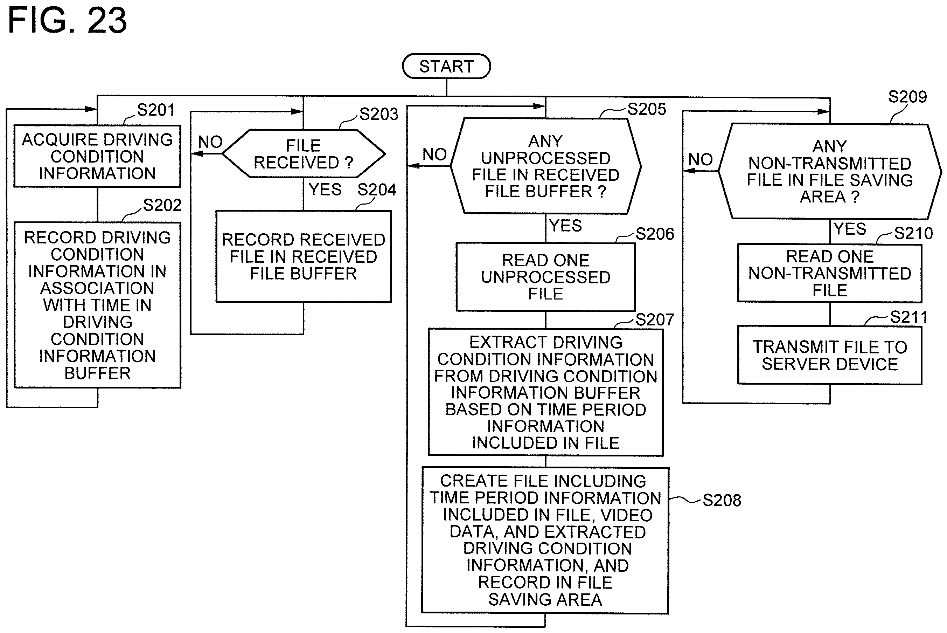

Fig. 23 is a flowchart illustrating an exemplary operation of the information terminal device 500. During startup, the information terminal device 500 performs the operation described below.

First, the driving condition information recording unit 571 of the information terminal device 500 uses the sensors 550-1 to 550-n to acquire driving condition information (S201), and stores the acquired driving condition information in the driving condition information buffer 562 in association with the time of day (S202). Then, the driving condition information recording unit 571 returns to step S201, and repeats the same operation as that described above.

In parallel with the operation described above, the file receiving unit 572 of the information terminal device 500 determines whether or not a file is received from the drive recorder 400 by the communication I/F unit 510 (S203), and when it is received, the file receiving unit 572 records the received file in the received file buffer 563 (S204). Then, the file receiving unit 572 returns to step S203, and repeats the same operation as that described above.

In parallel with the above operation, the data saving unit 574 of the information terminal device 500 determines whether or not an unprocessed file exists in the received file buffer 563 (S205), and if any, the data saving unit 574 reads one unprocessed file (S206). Here, in the case where a file including the file name 161, the time period information 162, and the video data 163 as illustrated in Fig. 18 is transmitted from the drive recorder 400, the data saving unit 574 handles the file as a single file. Further, in the case where a sub-file including the file name 161, the time period information 162, and the size information 165 of video data, and a main file including the file name 164 and the video data 163, as illustrated in Fig. 19, are transmitted from the drive recorder 400, the data saving unit 574 handles that in which the two files are combined as a single file. Next, the data saving unit 574 extracts driving condition information from the driving condition information buffer 562, by using the driving condition extraction unit 573, based on the information of the time period included in the readout file (S207). That is, the data saving unit 574 extracts driving condition information of the same time period as the received time period information. Next, the data saving unit 574 creates a file including the information of the time period and the video data included in the file and the extracted driving condition information, and records it in the file saving area as an erasure prohibited object (S208). The data saving unit 574 returns to step S205, and repeats the same operation as that described above.

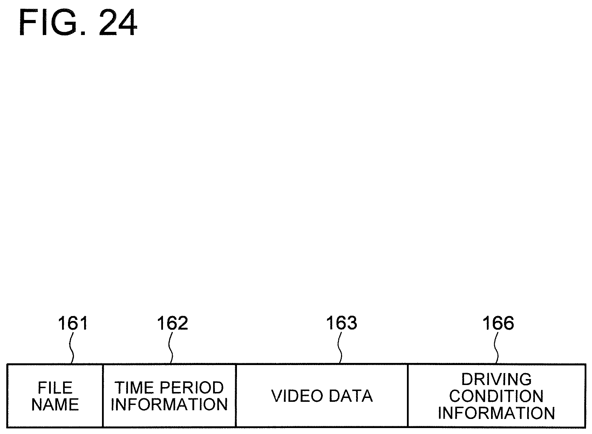

Fig. 24 illustrates an exemplary format of a file recorded in the data saving unit 574. In this example, the data saving unit 574 creates a file including the file name 161, the time period information 162, the video data 163, and the driving condition information 165.

In parallel with the above-described operation, the data saving unit 574 performs the operation described below. First, the data saving unit 574 determines whether or not a non-transmitted file exists in the file saving area 564 (S209), and if any, reads out one non-transmitted file (S210). Next, the data saving unit 574 uses the communication I/F unit 520 to transmit the readout file to the server device (S211). Then, the data saving unit 574 returns to step S209, and repeats the same operation as that described above.

According to the present exemplary embodiment, it is possible to enrich the types of driving condition information of the vehicle to be acquired without modifying the drive recorder 400. This is because the information terminal device 500 uniquely acquires driving condition information, and combines the acquired driving condition information and the video and the like received from the drive recorder 400.

Further, it is possible to reduce the driving condition information to be transmitted to the server device to a minimum amount required relating to the video. This is because the information terminal device 500 extracts the driving condition information of the same time period as that of the video of the drive recorder 400, and combines it with the video.

### [Fourth Exemplary Embodiment]

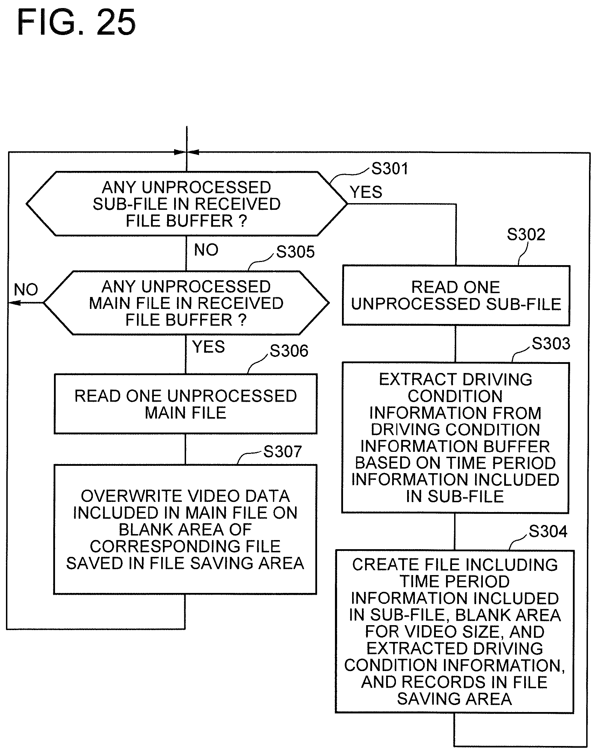

Next, a driving condition recording device according to a fourth exemplary embodiment of the present invention will be described. The driving condition recording device according to the present exemplary embodiment is similar to that of the third exemplary embodiment except for points (a) and (b) described below.
(a) The drive recorder 400 uses two types of files (main file and sub-file) illustrated in Fig. 19, and in the transmission at step S107 of Fig. 2, a sub file is transmitted in preference to a main file. For example, in the case where there are one or more sets of a main file and a sub-file of the same file name but having different branch numbers, all of the sub-files are transmitted first, and then the main files are transmitted. As the sub-file does not include video data, the file size thereof is much smaller than that of the main file. Therefore, transmission of the sub-file from the drive recorder 400 to the information terminal device 500 is completed in a shorter period compared with the main file.
(b) The data saving unit 574 of the information terminal device 500 executes steps S301 to S307 illustrated in Fig. 25, instead of steps S205 to S208 in the flowchart of Fig. 23.

Hereinafter, operation of the driving condition recording device according to the present exemplary embodiment will be described focusing on differences from the third exemplary embodiment.

When the data saving unit (160 or 275) of the drive recorder 400 creates a file including the video extracted by the video extraction unit (150 or 274) and information of the time period, the data saving unit creates two types of files (main file and sub-file) illustrated in Fig. 19. Then, in the transmission at step S107 of Fig. 2, the data saving unit (160 or 275) transmits the sub-file in preference to the main file, to the information terminal device 500.

Referring to Fig. 25, the data saving unit 574 of the information terminal device 500 determines whether or not an unprocessed sub-file exists in the received file buffer 563 (S301), and if any, reads out one unprocessed sub-file (S302). Next, the data saving unit 574 uses the driving condition extraction unit 573 to extract driving condition information from the driving condition information buffer 562, based on the information of the time period included in the unprocessed sub-file (S303). Next, the data saving unit 574 creates a file including the information of the time period included in the sub-file, a blank area for the video size, and the extracted driving condition information, and records it in the file saving area (S304). Then, the data saving unit 574 returns to step S301, and repeats the same operation as that described above. The format of the file created at step S304 is the same as that illustrated in Fig. 24, for example. However, the video data 163 part is blank. In addition, the file name 161 may be the same as the file name of the sub-file or one in which the branch number is deleted, for example.

When there is no unprocessed sub-file in the received file buffer 563, the data saving unit 574 determines whether or not an unprocessed main file exists (S305), and if any, reads out one unprocessed main file (S306). Next, the data saving unit 574 overwrites the video data included in the readout main file on the blank area of the corresponding file saved in the file saving area (S307). Here, the corresponding file is a file having a file name in which only the branch number is different from the file name of the main file.

As described above, according to the present exemplary embodiment, even if a communication delay occurs between the drive recorder 400 and the information terminal device 500, it is possible to prevent necessary driving condition information from being lost from the information terminal device 500. The reason for this is as described below.

In the driving condition information buffer 562 of the information terminal device 500, driving condition information is written sequentially from the head of the buffer, and when information is written up to the end of the buffer, writing is performed again from the head of the buffer. Therefore, driving condition information is lost from the buffer 562 when a certain time has passed. Thus, it is necessary to complete extraction of necessary driving condition information from the buffer before it is lost. However, driving condition information of which time period should be extracted is unknown until information of the time period is received from the drive recorder 400. Therefore, if time period information is received with a delay, there is a possibility that driving condition information of the time period has already been lost from the buffer. In particular, as illustrated in Fig. 18, in the configuration of transmitting time period information in the same file with video data, it takes a long communication time because the volume of the video data is large. Therefore, receiving of the time period information delays significantly. In contrast, by previously transmitting time period information by means of a small-sized sub-file from the drive recorder 400 to the information terminal device 500 as illustrated in Fig. 19, it is possible to quickly transmit time period information from the drive recorder 400 to the information terminal device 500. As a result, it is possible to prevent the time period information from being received with a delay, which enables extraction processing to be completed before necessary driving condition information is lost from the buffer.

While the present invention has been described with reference to the exemplary embodiments described above, the present invention is not limited to the above-described embodiments. Various additions and changes can be made within the scope of the present invention. For example, in the drive recorder of the exemplary embodiments described above, information of vehicle speed and acceleration of the vehicle and the position information of the vehicle, acquired on the drive recorder side, may be added as additional information of the video data.

### INDUSTRIAL APPLICABILITY

The present invention is applicable to a field of recording driving condition of a vehicle for analysis of causes of an accident of a vehicle such as an automobile, monitoring of driving condition, and safe driving guidance.

### REFERENCE SIGNS LIST

- 100: drive recorder
- 110: camera
- 120: video recording unit
- 130: abnormal event detection unit
- 140: time period determination unit
- 150: video extraction unit
- 160: data saving unit
- 131: acceleration sensor
- 132: comparator
- 161: file name
- 162: time period information
- 163: video data
- 164: file name
- 165: size information of video data
- 166: driving condition information
- 200: drive recorder
- 210: camera
- 220: communication I/F unit
- 230: operation input unit
- 240: screen display unit
- 250-1 ~ 250-n: sensor
- 260: storage unit
- 261: program
- 262: video buffer
- 263: video saving area
- 270: arithmetic processing unit
- 271: video recording unit
- 272: abnormal event detection unit
- 273: time period determination unit
- 274: video extraction unit
- 275: data saving unit
- 300: driving condition recording device
- 400: drive recorder
- 500: information terminal device
- 510: communication I/F unit
- 520: communication I/F unit
- 530: operation input unit
- 540: screen display unit
- 550-1 ~ 250-n: sensor
- 560: storage unit
- 561: program
- 562: driving condition information buffer
- 563: received file buffer
- 564: file saving area
- 570: arithmetic processing unit
- 571: driving condition information recording unit
- 572: file receiving unit
- 573: driving condition information extraction unit
- 574: data saving unit
- 1411: acceleration sensor
- 1412: maximum value detector
- 1413: comparator
- 1414: acceleration sensor
- 1415: pattern determination unit
- 1416: GPS sensor
- 1417: correspondence table of place and length of a time period
- 1418: arithmetic unit
- 1419: clock
- 1420: correspondence table of time and length of a time period
- 1421: arithmetic unit
- 1422: illuminance sensor
- 1423: correspondence table of illuminance and length of a time period
- 1424: arithmetic unit
- 1425: weather sensor
- 1426: correspondence table of weather conditions and length of a time period
- 1427: arithmetic unit
- 1428: biological sensor
- 1429: correspondence table of biological information and length of a time period
- 1430: arithmetic unit

## Claims

1. A drive recorder (100) comprising:
a camera (110) mountable on a vehicle;
a video recording means (120) adapted to record a video captured by the camera (110), in association with a time of day;
an abnormal event detection means (130) adapted to detect an abnormal event based on biological information of the driver detected by a biological sensor (1428), wherein the abnormal event detection means (130) are adapted to:
compare biological information of the driver of the vehicle, detected by the biological sensor, with normal values;
output abnormal event detection information including the current time of the day when the biological information is out of the normal values;
a time period determination means (140) adapted to determine a time period, the time period including a time of day when the abnormal event is detected and having a length determined based on the biological information of a driver of the vehicle, wherein the time period determination means (140) comprises:
the biological sensor (1428),
a correspondence table (1429) of sets of biological information and the length of the time periods relating to the biological information, and
an arithmetic unit (1430), wherein the biological sensor (1428) is configured to determine the physical condition of a driver based on a biological information including one or a combination of body temperature, blood pressure, heart rate, blood glucose level, consumed calories, brain waves, oxygen concentration, expiration and posture and output the result to the arithmetic unit (1430);
wherein the arithmetic unit is configured to search the correspondence table of biological information and the length of the time period by using the biological information detected by the biological sensor, and, based on the search result, the arithmetic unit is configured to determine and output the time period that includes the occurrence time of day of the abnormal event indicated by the abnormal even detection information and that has a length corresponding to the biological information of the driver,
a video extraction means (150) adapted to extract a video of the time period determined, from the video recording means (120); and
a data saving means (160) adapted to record or transmit to an external device a file including the video extracted as erasure prohibited object.

2. A processing method executed by a drive recorder, the method comprising:
recording (S101, S102) a video captured by a camera mountable on a vehicle, in association with a time of day;
detecting (S103) an abnormal event based on biological information of the driver detected by a biological sensor and outputting the result, comparing biological information of the driver of the vehicle, detected by the biological sensor, with normal values, and outputting abnormal event detection information including the current time of the day when the biological information is out of the normal values;
determining a time period, the time period including a time of day when the abnormal event is detected and having a length determined based on the biological information of a driver of the vehicle;
determining the physical condition of a driver, detected by the biological sensor based on a biological information including one or a combination of body temperature, blood pressure, heart rate, blood glucose level, consumed calories, brain waves, oxygen concentration, expiration and posture;
searching a correspondence table of sets of biological information and the length of the time periods relating to the biological information by using the biological information detected by the biological sensor, and, based on the search result, determining and outputting the time period that includes the occurrence time of day of the abnormal event indicated by the abnormal even detection information and that has a length corresponding to the biological information of the driver,
extracting a video of the time period determined, from the video recorded; and
recording or transmitting to an external device a file including the video extracted as erasure prohibited object.

## Patentansprüche

1. Fahrdatenschreiber (100), aufweisend:
eine an einem Fahrzeug montierbare Kamera (110);
eine Videoaufzeichnungseinrichtung (120), die dazu eingerichtet ist, ein durch die Kamera (110) aufgenommenes Video in Zuordnung zu einer Tageszeit aufzuzeichnen;
eine Einrichtung (130) zum Erfassen eines abnormalen Ereignisses, die dazu eingerichtet ist, ein abnormales Ereignis basierend auf biologischer Information des Fahrers zu erfassen, die durch einem biologischen Sensor (1428) erfasst wird, wobei die Einrichtung (130) zum Erfassen eines abnormalen Ereignisses dazu eingerichtet ist:
biologische Information des Fahrers des Fahrzeugs, die durch den biologischen Sensor erfasst wird, mit Normalwerten zu vergleichen;
Erfassungsinformation für ein abnormales Ereignis, einschließlich der aktuellen Tageszeit, auszugeben, wenn die biologische Information außerhalb der Normalwerte liegt;
eine Zeitperiodenbestimmungseinrichtung (140), die dazu eingerichtet ist, eine Zeitperiode zu bestimmen, wobei die Zeitperiode eine Tageszeit aufweist, zu der das abnormale Ereignis erfasst wird, und eine Länge aufweist, die basierend auf der biologischen Information eines Fahrers des Fahrzeugs bestimmt wird, wobei die Zeitperiodenbestimmungseinrichtung (140) aufweist:
den biologischen Sensor (1428);
eine Korrespondenztabelle (1429) von Sätzen biologischer Information und der Länge der Zeitperioden, die mit der biologischen Information in Beziehung stehen; und
eine Recheneinheit (1430), wobei der biologische Sensor (1428) dafür konfiguriert ist, den physischen Zustand eines Fahrers basierend auf biologischer Information zu bestimmen, die einen Parameter oder eine Kombination von Parametern aus der Körpertemperatur, dem Blutdruck, der Herzfrequenz, dem Blutzuckerspiegel, verbrauchten Kalorien, Gehirnströmen, der Sauerstoffkonzentration, der Exspiration und der Körperhaltung aufweist, und das Ergebnis an die Recheneinheit (1430) auszugeben,
wobei die Recheneinheit dafür konfiguriert ist, die Korrespondenztabelle von biologischer Information und der Länge der Zeitperiode unter Verwendung der durch den biologischen Sensor erfassten biologischen Information zu durchsuchen und basierend auf dem Suchergebnis die Recheneinheit dafür konfiguriert ist, die Zeitperiode zu bestimmen und auszugeben, die die Tageszeit des Auftretens des durch die Erfassungsinformation für ein abnormales Ereignis angezeigten abnormalen Ereignisses enthält, und eine Länge aufweist, die der biologischen Information des Fahrers entspricht;
eine Videoextraktionseinrichtung (150), die dazu eingerichtet ist, ein Video der bestimmten Zeitperiode von der Videoaufzeichnungseinrichtung (120) zu extrahieren; und
eine Datenspeichereinrichtung (160), die dazu eingerichtet ist, eine Datei, die das extrahierte Video enthält, als löschgeschütztes Objekt aufzuzeichnen oder an ein externes Gerät zu übertragen.

2. Verarbeitungsverfahren, das durch einen Fahrdatenschreiber ausgeführt wird, wobei das Verfahren aufweist:
Aufzeichnen (S101, S102) eines durch eine an einem Fahrzeug montierbare Kamera aufgenommenen Videos in Zuordnung zu einer Tageszeit;
Erfassen (S103) eines abnormalen Ereignisses basierend auf biologischer Information des Fahrers, die durch einen biologischen Sensor erfasst wird, und Ausgeben des Ergebnisses, Vergleichen von durch den biologischen Sensor erfasster biologischer Information des Fahrers des Fahrzeugs mit Normalwerten und Ausgeben von Erfassungsinformation für ein abnormales Ereignis, einschließlich der aktuellen Tageszeit, wenn die biologische Information außerhalb der Normalwerte liegt;
Bestimmen einer Zeitperiode, wobei die Zeitperiode eine Tageszeit aufweist, zu der das abnormale Ereignis erfasst wird, und eine Länge aufweist, die basierend auf der biologischen Information eines Fahrers des Fahrzeugs bestimmt ist;
Bestimmen des physischen Zustands eines Fahrers, der durch den biologischen Sensor erfasst wird, basierend auf biologischer Information, die einen Parameter oder eine Kombination von Parametern unter der Körpertemperatur, dem Blutdruck, der Herzfrequenz, dem Blutzuckerspiegel, verbrauchten Kalorien, Gehirnströmen, der Sauerstoffkonzentration, der Exspiration und der Körperhaltung aufweist;
Durchsuchen einer Korrespondenztabelle von Sätzen biologischer Information und der Länge der Zeitperioden, die mit der biologischen Information in Beziehung stehen, unter Verwendung der durch den biologischen Sensor erfassten biologischen Information; und basierend auf dem Suchergebnis: Bestimmen und Ausgeben der Zeitperiode, die die Tageszeit des Auftretens des durch die Erfassungsinformation für ein abnormales Ereignis angezeigten abnormalen Ereignisses aufweist und eine Länge aufweist, die der biologischen Information des Fahrers entspricht;
Extrahieren eines Videos der bestimmten Zeitperiode aus dem aufgezeichneten Video; und
Aufzeichnen oder Übertragen einer Datei, die das als löschgeschütztes Objekt extrahierte Video enthält, an ein externes Gerät.

## Revendications

1. Enregistreur de conduite (100) comportant :
une caméra (110) montable sur un véhicule ;
un moyen d'enregistrement de vidéo (120) adapté pour enregistrer une vidéo capturée par la caméra (110), en association avec une heure de la journée ;
un moyen de détection d'événement anormal (130) adapté pour détecter un événement anormal sur la base d'informations biologiques du conducteur détectées par un capteur biologique (1428), dans lequel le moyen de détection d'événement anormal (130) est adapté pour :
comparer des informations biologiques du conducteur du véhicule, détectées par le capteur biologique, avec des valeurs normales ;
délivrer en sortie des informations de détection d'événement anormal incluant l'heure actuelle de la journée lorsque les informations biologiques se situent en dehors des valeurs normales ;
un moyen de détermination de période (140) adapté pour déterminer une période, la période incluant une heure de la journée où l'événement anormal est détecté et ayant une durée déterminée sur la base des informations biologiques d'un conducteur du véhicule, dans lequel le moyen de détermination de période (140) comporte :
le capteur biologique (1428),
un tableau de correspondance (1429) entre des ensembles d'informations biologiques et la durée des périodes relatives aux informations biologiques, et
une unité arithmétique (1430), où le capteur biologique (1428) est configuré pour déterminer l'état physique d'un conducteur sur la base d'une information biologique incluant l'un parmi ou une combinaison de la température corporelle, la pression artérielle, la fréquence cardiaque, le taux de glycémie, les calories consommées, les ondes cérébrales, la concentration en oxygène, l'expiration et la posture et délivrer en sortie le résultat à l'unité arithmétique (1430) ;
dans lequel l'unité arithmétique est configurée pour effectuer une recherche dans le tableau de correspondance entre les informations biologiques et la durée de la période en utilisant les informations biologiques détectées par le capteur biologique, et, sur la base du résultat de recherche, l'unité arithmétique est configurée pour déterminer et délivrer en sortie la période qui inclut l'heure d'occurrence de la journée de l'événement anormal indiqué par les informations de détection d'événement anormal et qui a une durée correspondant aux informations biologiques du conducteur,
un moyen d'extraction de vidéo (150) adapté pour extraire une vidéo de la période déterminée, à partir du moyen d'enregistrement vidéo (120) ; et
un moyen de sauvegarde de données (160) adapté pour enregistrer ou transmettre à un dispositif externe un fichier incluant la vidéo extraite comme objet qu'il est interdit d'effacer.

2. Procédé de traitement exécuté par un enregistreur de conduite, le procédé comportant :
l'enregistrement (S101, S102) d'une vidéo capturée par une caméra montable sur un véhicule, en association avec une heure de la journée ;
la détection (S103) d'un événement anormal sur la base d'informations biologiques du conducteur détectées par un capteur biologique et la délivrance en sortie du résultat, la comparaison d'informations biologiques du conducteur du véhicule, détectées par le capteur biologique, avec des valeurs normales, et la délivrance en sortie d'informations de détection d'événement anormal incluant l'heure actuelle de la journée lorsque les informations biologiques se situent en dehors des valeurs normales ;
la détermination d'une période, la période incluant une heure de la journée où l'événement anormal est détecté et ayant une durée déterminée sur la base des informations biologiques d'un conducteur du véhicule ;
la détermination de l'état physique d'un conducteur, détecté par le capteur biologique sur la base d'une information biologique incluant l'un parmi ou une combinaison de la température corporelle, la pression artérielle, la fréquence cardiaque, le taux de glycémie, les calories consommées, les ondes cérébrales, la concentration en oxygène, l'expiration et la posture ;
la réalisation d'une recherche dans un tableau de correspondance entre des ensembles d'informations biologiques et la durée des périodes relatives aux informations biologiques en utilisant les informations biologiques détectées par le capteur biologique, et, sur la base du résultat de recherche, la détermination et la délivrance en sortie de la période qui inclut l'heure d'occurrence de la journée de l'événement anormal indiquée par les informations de détection d'événement anormal et qui a une durée correspondant aux informations biologiques du conducteur,
l'extraction d'une vidéo de la période déterminée, à partir de la vidéo enregistrée ; et
l'enregistrement ou la transmission vers un dispositif externe d'un fichier incluant la vidéo extraite comme objet qu'il est interdit d'effacer.
